# EUROPEAN PATENT APPLICATION

(11) **EP 4 783 205 A1**
(43) Date of publication of application: **29.07.2026**
(21) Application number: 25153446.7
(22) Date of filing: 23.01.2025
(51) Int. Cl.: H01F 38/14, H01F 27/36, H01F 27/26, H01F 41/00, H01F 41/02, H01F 3/08

(54) **A METHOD FOR PRODUCING A FERRITE ASSEMBLY FOR A WIRELESS POWER TRANSFER DEVICE, A CORRESPONDING FERRITE ASSEMBLY, A METHOD FOR PRODUCING A WIRELESS POWER TRANSFER DEVICE, A CORRESPONDING WIRELESS POWER TRANSFER DEVICE, AS WELL AS A PRODUCTION DEVICE**

(71) Applicant: Siemens Aktiengesellschaft, 80333 München (DE)
(72) Inventor: Ivancic, Nikola, 81825 München (DE)
(74) Representative: Siemens Patent Attorneys

(57) **Abstract**

The invention relates to a method for producing a ferrite assembly (16) of a wireless power transfer device (10) by a production device (18), comprising the steps of: providing a molding form (22) for the ferrite assembly (16); assembling at least one ferrite tile (24) of the ferrite assembly (16) in the molding form (22); pouring a material for encapsulation (36) in at least one opening (38) at the molding form (22); and hardening the material for encapsulation (36) with the at least one ferrite tile (24); and providing the hardened material for encapsulation (36) with the at least one ferrite tile (24) as the ferrite assembly (16). Furthermore, the present invention relates to a ferrite assembly (16), to a method for producing a wireless power transfer device (10), a wireless power transfer device (10), as well as a production device (18).

## Description

The present invention relates to a method for producing a ferrite assembly of a wireless power transfer device by a production device according to the pending claim 1. Furthermore, the present invention relates to a ferrite assembly produced according to the method, a method for producing a wireless power transfer device, a wireless power transfer device, as well as a production device.

A wireless power transfer device (WPT), typically consists of a transmitter coil, a receiver coil, and a magnetic core. Ferrite tiles are often used as a magnetic core material in the WPT system, particularly those designed for high power transfer.

The transmitter coil generates an alternating magnetic field that is used to transfer energy wirelessly to the receiver coil. This coil is typically made of conducting material, such as copper or aluminum, and its size and shape depend on the specific application. The receiver coil is located near the transmitter coil and receives the alternating magnetic field generated by the transmitter coil. It converts the magnetic energy into electrical energy that can be used to power electronic devices, like the transmitter coil, the size and shape of the receiver coil depend on the specific application. The magnetic core is a material that concentrates the magnetic field generated by the transmitter coil and guides it towards the receiver coil. Ferrite tiles are often used as a magnetic core material in the WPT systems due to their high magnetic permeability, low electrical conductivity, and mechanical stability. The ferrite tiles are made of ferromagnetic ceramic materials that have a high magnetic permeability, which allows them to efficiently concentrate the magnetic field generated by the transmitter coil. The tiles are typically arranged in a stacked configuration under the transmitter and receiver coils, forming a magnetic core. The shape, size, and arrangement of the ferrite tiles can be optimized for specific applications to maximize power transfer efficiency.

The power transfer efficiency is an important consideration in WPT systems. High power transfer efficiency reduces heat dissipation and energy loss during wireless power transfer. Ferrite tiles can help improve power transfer efficiency by concentrating the magnetic field and reducing leakage, which results in a higher proportion of the transmitted power being received by the receiver.

In summary, ferrite tiles are an important component in WPT systems due to their high magnetic permeability and low electrical conductivity. They help improve power transfer efficiency and reduce heat dissipation and energy loss during wireless power transfer. The shape, size, and arrangement of the ferrite tiles can be optimized for specific applications to maximize power transfer efficiency and ensure safety compliance.

WPT systems ground assembly, in particular, needs to have a ferritic plate structure. During definition of the WPT device, there is an ideal magnetics proposal and size. Because of the large size it needs to be divided into something producible. Therefore, a priority of smaller tiles is used.

Current solutions according to the state of the art are avoiding placing tile by tile into the main product but optimizing it for production and creating a ferrite ferrite assembly which is added to the product as a single plate. The complexity is therefore pushed outside of the main product.

It is an object of the present invention to provide a method for producing a ferrite assembly of a wireless power transfer device a, a corresponding ferrite assembly a, a corresponding method for producing a wireless power transfer device, a corresponding wireless power transfer device, as well as a corresponding production device, by which the disadvantages of the state of the art are overcome.

In particular it is an object of the present invention to provide a method for producing a ferrite assembly, a corresponding ferrite assembly, a corresponding method for producing a wireless power transfer device, a corresponding wireless power transfer device, as well as a corresponding production device, by which the efficiency of producing the ferrite assembly is raised.

This object is solved by a method for producing a ferrite assembly, a corresponding ferrite assembly, a corresponding method for producing a wireless power transfer device, a corresponding wireless power transfer device, as well as a corresponding production device according to the independent claims. Advantageous embodiments are presented in the dependent claims.

One aspect of the invention relates to a method for producing a ferrite assembly of a wireless power transfer device by a production device. A molding form for the ferrite assembly for example with a first part is provided. At least one ferrite tile of the ferrite assembly is assembled in the molding form, for example in the first part. Optionally the molding form is closed with a second part of the molding form. A material for encapsulation, for example a plastic casting, is poured in, in particular injected in, at least one opening, in particular an injection opening, of the molding from. The material for encapsulation is hardened with the at least one ferrite tile and optionally the material for encapsulation with at least one ferrite tile is removed as the ferrite assembly from the molding form.

Therefore, a ferrite assembly is created, which is optimized in a process efficient way.

In other words, for example only, in a first step, at least one ferrite tile and/or plurality of ferrite tiles is placed into the first part, which may also be regarded as a so-called positioning mold. The entire ferrite structure is positioned into the mold. Each tile has its own structure for positioning it and holding it in place. In a second step, the mold is closed and in particular for example a pressing the ferrite tiles by the second part of the mold is provided. In the third step, for example a low pressure plastic/potting casting as the material for encapsulation is injected into the molding form. In a fourth step the ferrite assembly is produced and ready for the further assembly line, in particular for example for further producing the wireless power transfer device.

The invention has the advantage that the assembly process/industrialization process is simplified, and glue cure time is eliminated. Furthermore, thermal advantages arise, in particular with the facts that tolerance compensation gaps are filled with material, it is also possible to use non-metal fillers to improve thermal conductivity. Furthermore, the possibility to use ferro magnetic fillers may be provided to improve thermal conductivity and magnetics.

For example, the wireless power transfer device may be used for charging electric vehicles (EV) without the need for physical connections. The wireless power transfer device for EV charging typically use resonant inductive coupling, where two coils are magnetically coupled and tuned to resonate at the same frequency. The power transfer level from the wireless power transfer device used for EV charging range from a few kilowatts to hundreds of kilowatts, depending on the specific application and regulatory requirements. The operating frequency of the wireless power transfer systems for EV charging is typically in the low to mid kilohertz range, which allows for high power transfer efficiency and reduced electromagnetic interference with other devices. The transmitter coil is located on or near the ground and it can be several meters in diameter. It generates a strong alternating magnetic field that is used to transfer energy wirelessly to each receiver coil. The receiver coil is typically integrated into the EV's chassis and is magnetically coupled to the transmitter coil. It converts the alternating magnetic field generated by the transmitter coil into electrical energy that can be used to charge the EV's battery.

Ferrit tiles or other types of magnetic core materials are often used in the wireless power transfer device for EV charging to improve power transfer efficiency and reduce heat dissipation and energy loss during wireless power transfer. Power transfer efficiency is an important consideration in the wireless power transfer device for EV charging, as high power transfer efficiency reduces heat dissipation and energy loss during wireless power transfer. Ferrite tiles and other magnetic core materials can help improve power transfer efficiency by concentrating the magnetic field and reducing leakage, which results in a higher proportion of the transmitted power being received by the receiver coil. Safety is also an important consideration in the wireless power transfer devices for EV charging, as the alternating magnetic field generated by the transmitter coil can cause harm to living organism. The international commission on non-ionizing radiation protection has established guidelines for safe exposure levels to electromagnetic fields. Wireless power transfer devices designers must ensure that their devices comply with the safety standards to protect users and bystanders from potential harm.

Alignment between the transmitter coil and receiver coil is an important consideration in the wireless power transfer devices for EV charging, as a misalignment can significantly reduce power transfer efficiency. Advanced control systems are typically used to ensure accurate alignment between the two coils. Wireless power transfer devices for EV charging must comply with regulatory standards established by organizations such as the society of automotive engineers and the international electro technical commission. These standards specify requirements related to power transfer levels, operating frequency, safety and interoperability. Wireless power transfer devices for EV charging offer a promising solution for convenient and efficient charging of electric vehicles. Ferrite tiles and other magnetic core materials can help improve power transfer efficiency and reduce heat dissipation and energy loss during wireless power transfer. Safety, alignment requirements, and regulatory standards are important considerations in the design and implementation of the wireless power transfer device for EV charging.

According to an embodiment the first part of the molding form is provided with at least one holding element for the at least one tile. In particular, for each tile used in the ferrite assembly a holding element is provided in the first part. Therefore, the ferrite tile can be arranged inside the holding element and therefore, securing the position of the ferrite tile during the production process is provided.

In another embodiment the at least one holding element is provided with a tolerance compensation for the at least one ferrite tile. In particular, because the ferrite tiles may differ a little bit in the sizes, the tolerance compensation is provided. Therefore, also ferrite tiles with different sizes can be arranged inside the first part of the holding element. Therefore, an efficient way for producing the ferrite assembly is provided.

According to another embodiment the first part of the molding form is provided with at least one ferrite spacing element. In particular, for example at least three ferrite spacing (distance) elements are provided. In particular, the ferrite spacing elements are used for holding a distance between the tiles and, for example, the first part of the molding form. Therefore, it can be realized, that the plastic casting can form a stable "housing" for the tiles during production.

According to another embodiment the second part of the molding form is provided with at least one further ferrite spacing element. Therefore, also a distance between, for example, the second part of the molding form can be provided by the second part. Therefore, it is provided, that the plastic casting can build a stabile housing for the ferrite tiles.

In another embodiment the further ferrite spacing element is provided with a spring element. Therefore, a low pressure can be generated with the spring element to the ferrite tile. This has the advantage that a positon of the ferrite tiles can be stabilized during the production process and therefore a more efficient way for producing the ferrite assembly is provided.

In another embodiment the material for encapsulation is pounded with a temperature conductivity additive. The temperature stabilizing additives for the plastic casting may be used to improve the thermal stability and dimensional accuracy of the plastic part during the processing and use. These additives may help to prevent degradation, warping, and other issues related to temperature fluctuations. In particular, in the case of ferrite tiles in the wireless power transfer device due to losses heat is generated on the tiles and temperature raises. For example, heat stabilizers may be used. These additives, such as lead or calcium-zinc-based compounds help preventing thermal degradation of plastics by neutralizing the effects of heat and light. They are commonly used in polyvinyl chloride and other polymers that are susceptible to thermal degradation. Furthermore, antioxidants may be used. These additives, such as hindered phenolic or phosphide compounds, help prevent oxidative degradation of plastics by scavenging free radicals and other reactive species. They are commonly used for polyolefins, such as polypropylene and polyethylene, which are susceptible to oxidation. Furthermore, flame retardants may be used as additives, such as halogenated or phosphorous-based compounds, help preventing combustion of plastic by releasing non-flammable gases and forming a char layer on the surface of the material. They are commonly used in electronic components and other applications where flame retardancy is critical. Nucleating agents may be used, such as talc or glass fibers, help improving the crystallization behavior of plastics by promoting the formation of small, uniform crystals. They can help improving a dimensional stability, reduce warping, and improve thermal conductivity. Fiber reinforcement additives may be used, such as carbon fiber or glass fiber, help improving the mechanical strength and stiffness of plastic, especially at elevated temperatures. They are commonly used in high-performance applications, such as automotive components and aerospace structures. Further fillers may be used such as calcium carbonate or clay, help improving the thermal conductivity and dimensional stability of plastics. They can also reduce shrinkage and warping during processing. For ferrite tiles in the wireless power transfer device, temperature stabilizing additives such as heat stabilizers, antioxidants, and nucleating agents may be used to prevent degradation, warping, and other issues related to temperature fluctuations. The specific type and amount of additive may depend on the polymer matrix used for the ferrite tiles and the intended use case.

In another embodiment, the material for encapsulation is, for example, pounded with a ferromagnetic additive. Magnetic additives for plastic castings, including ferrite tiles used in the wireless power transfer device, can enhance the magnetic properties of the polymer matrix and improve the performance of the final product. For example, ferromagnetic powders may be used, such as iron, nickel, or cobalt, and can be added to plastic matrices to enhance their magnetic properties. These powders can increase the saturation magnetization, and reduce the co-activity of the material, making it easier to achieve high power transfer efficiency in the wireless power transfer device. Soft ferities such as manganese-zinc or nickel-zinc ferities, are magnetic materials with low coercivity and high resistivity. They can be added to plastic matrices to improve their magnetic properties while maintaining good electrical insulation. Soft ferrites are commonly used in the wireless power transfer devices for EV charging due to their high magnetic permeability and low loss at low frequencies. Strontium ferrite is a type of hard ferrite with high coercivity and high resistivity. It can be added to plastic matrices to enhance their magnetic properties and improve the stability of the magnetic field in the wireless power transfer systems. Strontium ferrite is commonly used in antennas, transformers, and other electromagnetic applications. Magnetically-aligned fibers such as carbon or glass fibers coated with ferromagnetic materials, can be added to plastic mattresses to enhance their magnetic anisotropy and improve the stability of the magnetic field in the wireless power transfer device. These fibers can also help reduce any current losses and increase the thermal conductivity of the material. Magnetic nanoparticles, such as iron oxide or cobalt ferrite, can be added to plastic mattresses to enhance their magnetic properties at the nanoscale. These nanoparticles can form chains or clusters that align with the applied magnetic field and improve the magnetic response of the material. They can also help reducing the size of the weight of the wireless power transfer device by enabling higher power transfer efficiency in smaller spaces. It is important to note, that the specific type and amount of magnetic additive used in plastic castings, including ferrite tiles for the wireless power transfer system, may depend on the desired magnetic properties and processing requirements.

In another embodiment, the material for encapsulation is pounded with magnetic powder as the ferromagnetic additive. For example, ferromagnetic powders may be used, such as iron, nickel, or cobalt, and can be added to plastic matrices to enhance their magnetic properties. These powders can increase the saturation magnetization, and reduce the co-activity of the material, making it easier to achieve high power transfer efficiency in the wireless power transfer device

In another embodiment in the first part of the molding form a plurality of ferrite tiles are arranged. In particular, depending on the use case of the wireless power transfer device, the plurality of ferrite tiles are arranged.

In another embodiment the first part of the molding form is provided with an elevation element for generating a cavity in the ferrite assembly. In particular, by injecting the plastic casting, the cavity is formed. Therefore, for example, the ferrite assembly can be arranged at the coil of the wireless power transfer device and/or different cables can be put through the cavity.

Another aspect of the invention relates to a ferrite assembly produced according to a method according to the preceding aspect.

A further aspect of the invention relates to a method for producing a wireless power transfer device. The ferrite assembly generated according to the preceding aspect is provided. At least one coil for the wireless power transfer device is provided. The at least one coil and the ferrite assembly are arranged to the wireless power transfer device.

Furthermore, the present invention relates also to a wireless power transfer device produced by a method according to the preceding aspect.

Furthermore, the invention relates to a production device for producing at least a ferrite assembly according to the preceding aspect and/or a wireless power transfer device according to the preceding aspect, wherein the production device comprises at least the molding form and at least one plastic casting injection device.

Advantageous embodiments of the method for producing the ferrite assembly are to be regarded as advantageous embodiments of the ferrite assembly, the method for producing the wireless power transfer device, the wireless power transfer device, as well as the production device.

Independent of the grammatical term usage, individuals with male, female or other gender identities are included within the term.

Further features and feature combinations of the invention are obtained from the figure and their description as well as the claims. In particular, further implementations of the invention may not necessarily contain all features of one of the claims. Further implementations of the invention may comprise features or combinations of features, which are not recited in the claims.

Therefore, the figures show in:
- FIG 1: a schematic perspective view according to an embodiment of a wireless power transfer device;
- FIG 2: a schematic perspective view according to a production step;
- FIG 3: another schematic perspective view according to another production step;
- FIG 4: another schematic view according to an embodiment of a production step; and
- FIG 5: another schematic view according to an embodiment of a production process.

In the figures the same elements are comprising the same reference signs.

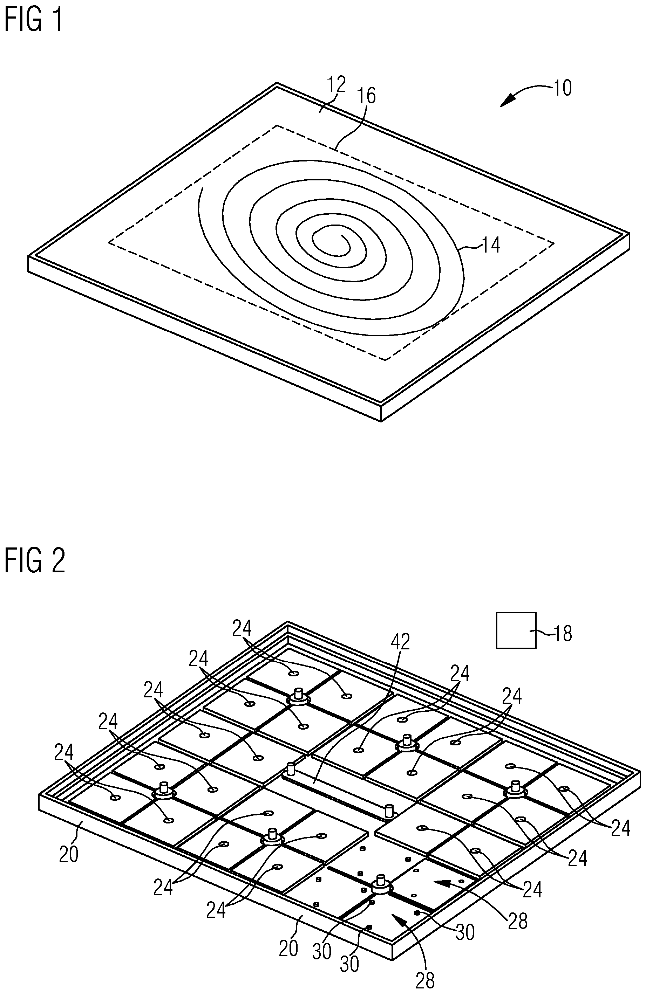

FIG 1 shows a perspective view according to an embodiment of a wireless power transfer device 10. The wireless power transfer device 10 comprises for example a housing 12, wherein the housing 12 is for example configured for being overdriven by a motor vehicle. The wireless power transfer device 10 may in particular be configured for providing electrical energy, in particular wirelessly, for example for charging the motor vehicle. Therefore, the wireless power transfer device 10 comprises a coil 14. Furthermore, for example under the coil 14, a ferrite assembly 16 is arranged.

FIG 2 shows a schematic perspective view according to a producing step with a production device 18 for producing the ferrite assembly 16.

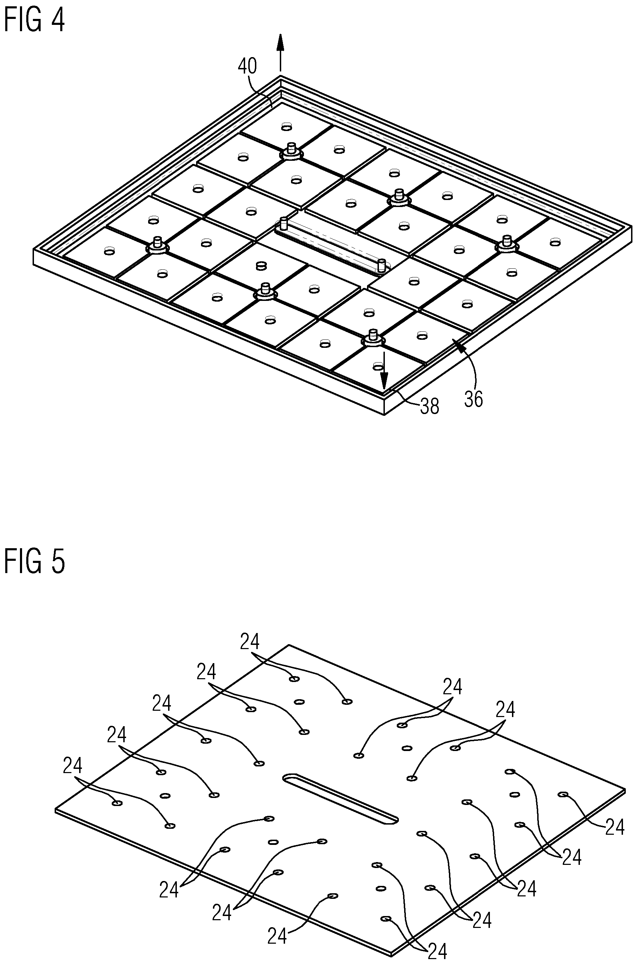

In particular, the FIG 2 shows that a first part 20 of a molding form 22 (FIG 4) is provided for a ferrite assembly 16. At least one ferrite tile 24 is assembled in the first part 20. In particular, a plurality of ferrite tiles 24 is assembled inside the first part 20.

In particular, the first part 20 comprises at least one holding element 28 for the at least one tile 24. Furthermore, the at least one holding element 28 is provided with a tolerance compensation for the at least one ferrite tile 24. Furthermore, the first part 20 of the molding form 22 is provided with at least one ferrite spacing element 30. In particular, for each holding element 28, three ferrite spacing elements 30 are provided.

Furthermore, the first part 20 may comprise an elevation element 42, wherein the elevation element 42 is configured for generating a cavity in the ferrite assembly 16.

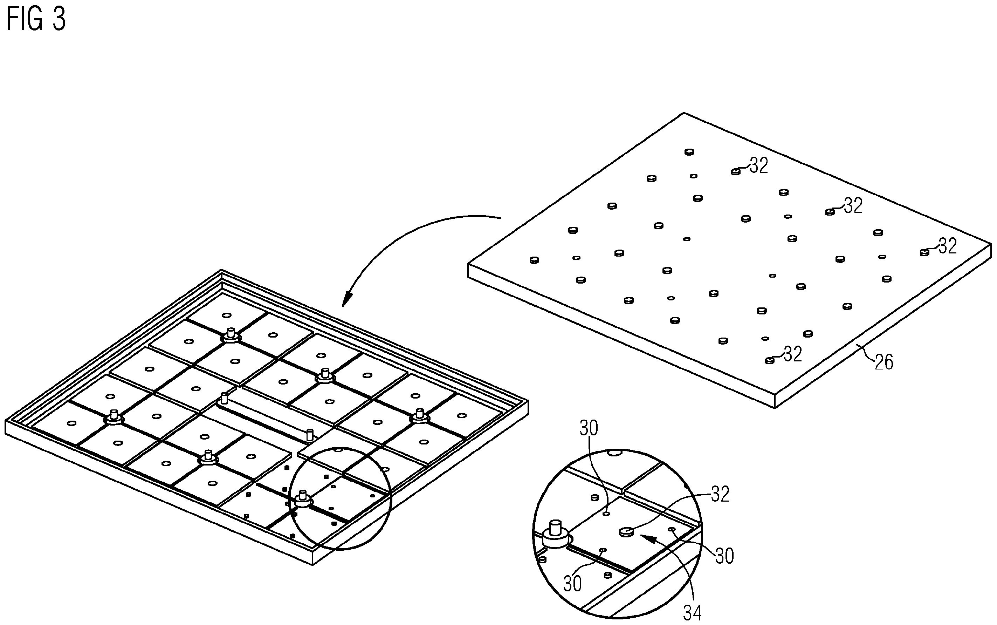

FIG 3 shows another step of the method for producing the ferrite assembly 16. In particular, FIG 3 shows, that the molding form 22 is closed with a second part 26 of the molding form 22.

FIG 3 further shows, that the second part 26 is provided with at least one further ferrite spacing element 32. Wherein the further ferrite spacing element 32 may, for example, comprise at least one spring element 34. The further ferrite spacing element 32 is in particular configured to press and hold the ferrite tiles 24 in position. Furthermore, the three ferrite spacing elements 32 of the first part 20 are shown, wherein these are configured for holding each ferrite tile 24 on the bottom mold part.

FIG 4 shows another perspective view according to an embodiment of the method. In particular, it is shown, that for example, material for encapsulation 36, in particular a plastic casting, is pounded, in particular injected, via at least one opening 38 of the second part 26. Furthermore, the second part 26 may comprise a second opening 40, wherein the second opening 40 is configured for releasing air out of the cavity when the material for encapsulation 36 is injected. The material for encapsulation 36 may be injected with a temperature conductivity additive. Furthermore, the material for encapsulation 36 is injected with a ferromagnetic additive, wherein this ferromagnetic additive may be in particular magnetic powder.

FIG 5 shows a perspective view after hardening of the injected material for encapsulation 36. Therefore, after injecting the material for encapsulation 36 in the molding form 22, the material for encapsulation 36 is hardened with at least one ferrite tile 24, and the material for encapsulation 36 with the at least one ferrite tile 24 is removed from the molding form 22 as the ferrite assembly 16.

Therefore, for generating the ferrite assembly 16, just the placement of the ferrite tiles 24 in the molding form 22, closing the molding form 22 and the material injection and the curing time of the material for encapsulation 36 is used for generating the ferrite assembly 16.

By adding the thermal stabilizing additive, the thermal characteristics of the ferrite assembly 16 can be adapted. Therefore, a higher thermal conductivity is provided. Furthermore, by adding for example ferromagnetic materials into the material for encapsulation 36, an influence on the magnetics can be provided and optimized.

### List of Reference

- 10: wireless power transfer device
- 12: housing
- 14: coil
- 16: ferrite assembly
- 18: production device
- 20: first part
- 22: molding form
- 24: ferrite tile
- 26: second part
- 28: holding element
- 30: ferrite spacing element
- 32: further ferrite spacing element
- 34: spring element
- 36: material for encapsulation
- 38: first opening
- 40: second opening
- 42: elevation element

## Claims

1. A method for producing a ferrite assembly (16) of a wireless power transfer device (10) by a production device (18), comprising the steps of:
- providing a molding form (22) for the ferrite assembly (16);
- assembling at least one ferrite tile (24) of the ferrite assembly (16) in the molding form (22);
- pouring a material for encapsulation (36) in at least one opening (38) at the molding form (22); and
- hardening the material for encapsulation (36) with the at least one ferrite tile (24); and
- providing the hardened material for encapsulation (36) with the at least one ferrite tile (24) as the ferrite assembly (16).

2. The method according to claim 1, **characterized in that**
the molding form (22) is provided with at least one holding element (28) for the at least one tile (24).

3. The method according to claim 2, **characterized in that**
the at least one holding element (28) is provided with a tolerance compensation for the at least one ferrite tile (24).

4. The method according to any one of claims 1 to 3, **characterized in that** molding form (22) is provided with at least one ferrite spacing element (30).

5. The method according to any one of claims 1 to 4, **characterized in that**
the molding form (22) is provided with at least one further ferrite spacing element (32).

6. The method according to claim 5, **characterized in that**
the further distance element (32) is provided with a spring element (34).

7. The method according to any one of claims 1 to 6, **characterized in that**
the material for encapsulation (36) is pounded, in particular injected, with a temperature conducting additive for improving thermal conduction in the ferrite assembly.

8. The method according to any one of claims 1 to 7, **characterized in that**
the material for encapsulation (36) is pounded with a ferromagnetic additive to improve magnetic properties.

9. The method according to claim 8, **characterized in that**
the material for encapsulation (36) is pounded with a magnetic powder as the ferromagnetic additive.

10. The method according to any one of claims 1 to 9, **characterized in that**
in the molding form (22) a plurality of ferrite tiles (24) are arranged.

11. The method according to any one of claims 1 to 10, **characterized in that**
the molding form (22) is provided with an elevation element (42) for generating a cavity in the ferrite assembly (16).

12. A ferrite assembly (16) produced according to a method according to any one of claims 1 to 11.

13. A method for producing a wireless power transfer device (10), comprising the steps of:
- providing a ferrite assembly (16) generated according to claim 12.
- providing at least one coil (14) for the wireless power transfer device (10); and
- arranging at least the coil (14) and the ferrite assembly (16) to the wireless power transfer device (10).

14. A wireless power transfer device (10) produced by a method according to claim 13.

15. A production device (18) for producing at least a ferrite assembly (16) according to claim 12 and/or a wireless power transfer device (10) according to claim 14, comprising at the molding form (20) and at least one plastic casting injection device.
